# EUROPEAN PATENT APPLICATION

(11) **EP 2 266 394 A1**
(43) Date of publication of application: **29.12.2010**
(21) Application number: 09007926.0
(22) Date of filing: 17.06.2009
(51) Int. Cl.: A01N 25/08, A01N 25/30, A01N 57/20

(54) **Non-aqueous agricultural compositions**

(71) Applicant: Cognis IP Management GmbH, 40589 Düsseldorf (DE)
(72) Inventor: Merlet, Stéphanie, 40547 Düsseldorf (DE); Abribat, Benoit, 77310 Saint Fargeau Ponthierry (FR)
(74) Representative: Fabry, Bernd

(57) **Abstract**

Suggested are new non-aqueous agricultural compositions, comprising
(a) biocides and
(b) alkoxylation products of unsaturated fatty alcohols.

## Description

### Field of the invention

The present invention is related to the area of agriculture and refers to new agricultural compositions comprising biocides and adjuvants, more particular compositions of glyphosate and alkoxylation products of unsaturated fatty alcohols.

### Background of the invention

The crop protection market represents a total value of around €22 billion/year. Most biocides are formulated with adjuvants (also known as potentiators) to maximise their efficacy by fulfilling several functions. An adjuvant must provide good wetting of the leaf surface, facilitate the foliar penetration of the biocide under a wide range of climatic conditions and enhance, or at least not inhibit, translocation of the biocide, in particular the herbicide into the plant. In addition, it must not produce phytotoxic effects when used on specific resistant crops.

For example, the use of ethoxylated vegetable oils as additives for biocide and plant protection formulations represents a well known state of the art. One of the first references describing ethoxylated triglycerides for this purpose has been a laid-open publication from earlier German Democratic Republic DD 268147 A1. In this context also reference is made to international patent application WO 98/009518 A1 (Cognis) disclosing agricultural composition comprising a liquid carrier and an emulsifier mixture consisting of alkyl polyglucosides and fatty acids. From the two German applications DE 100 00 320 A1 und DE 100 18 159 A1 (both Cognis) compositions are known comprising certain contact herbicides and ethoxylated fatty alcohols or fatty acids. European patent EP 0804241 B1 (SEPPIC) refers to ethoxylated fatty acid esters and triglycerides and their use as auto-emulsifiable systems for making agricultural compositions. Ethoxylated polyol esters are widely used in the formulation of pesticides. Well known are ethoxylated glycerides like ethoxylates of castor oil or soybean oil, or sorbitol- and sorbitan esters, which can be found in the market. EP 1063883 B1 (Cognis) describes the use of alkoxylation products of alkyl glycosides as adjuvants for agricultural compositions. The use of fatty alcohol ethoxylates in combination with amine surfactants for aqueous solutions of at least two herbicides is known from CA 2369636 A1 (Monsanto).

Also tallow amine ethoxylates (TAE) represent very common adjuvants for a wide range of biocides, namely also for glyphosate and its salts. For example, US 4,557,751 (3M) discloses the use of various alkoxylates including ethoxylates of fatty amines as additives for aqueous herbicide compositions. Its disadvantage, however, is that TAE cannot be handled in non-aqueous biocide formulations. It is necessary to use aqueous biocide solutions or dispersions and add the adjuvants obtaining liquid formulations comprising typically more than 50 % water. The high amount of water, of course, causes unwanted costs for transportation and storage compared to a non-aqueous formulation. In addition, in aqueous solutiuon very often compatibility problems between the biocide and the adjuvant occurs, causing phase separation and sedimentation. The object of the present invention has been to overcome exactly these problems known from the state of the art. More particular, the object of the present invention has been to provide solid agricultural compositions, free of water, comprising biocides in general and glyphosate in particular and an adjuvant. Said solid compositions should overcome present compatibility problems known from aqueous formulations, but also express a high efficiency as known from TAE.

### Detailed description of the invention

The present invention refers to non-aqueous, in particular solid agricultural compositions, comprising
(a) biocides and
(b) alkoxylation products of unsaturated fatty alcohols.

Surprisingly it has been observed that alkoxylation products of unsaturated fatty alcohols show an adjuvant performance that is equivalent or even better than other adjuvants known from the state of the art. However, unlike for example alkoxylation products of tallow amines the unsaturated alcohol alkoxylates are solid or waxy at room temperature, but become liquid and fluid at elevated temperatures. This allows formulating and processing solid biocide compositions, in particular solid glyphosate compositions in order to overcome compatibility problems between biocide and adjuvant which occur very often in aqueous systems.

### Biocides

A biocide in the context of the present invention is a plant protection agent, more particular a chemical substance capable of killing different forms of living organisms used in fields such as medicine, agriculture, forestry, and mosquito control. Also counted under the group of biocides are so-called plant growth regulators. Usually, biocides are divided into two sub-groups:
o pesticides, which includes fungicides, herbicides, insecticides, algicides, moluscicides, miticides and rodenticides, (here, The Pesticide Handbook, 14th edition, BCPC 2006 is included as a reference) and
o antimicrobials, which includes germicides, antibiotics, antibacterials, antivirals, antifungals, antiprotozoals and antiparasites.

Biocides can also be added to other materials (typically liquids) to protect the material from biological infestation and growth. For example, certain types of quaternary ammonium compounds (quats) can be added to pool water or industrial water systems to act as an algicide, protecting the water from infestation and growth of algae.

### Pesticides

The U.S Environmental Protection Agency (EPA) defines a pesticide as "any substance or mixture of substances intended for preventing, destroying, repelling, or mitigating any pest". A pesticide may be a chemical substance or biological agent (such as a virus or bacteria) used against pests including insects, plant pathogens, weeds, mollusks, birds, mammals, fish, nematodes (roundworms) and microbes that compete with humans for food, destroy property, spread disease or are a nuisance. In the following examples, pesticides suitable for the agrochemical compositions according to the present invention are given:
***Fungicides.*** A fungicide is one of three main methods of pest control - the chemical control of fungi in this case. Fungicides are chemical compounds used to prevent the spread of fungi in gardens and crops. Fungicides are also used to fight fungal infections. Fungicides can either be contact or systemic. A contact fungicide kills fungi when sprayed on its surface. A systemic fungicide has to be absorbed by the fungus before the fungus dies. Examples for suitable fungicides, according to the present invention, encompass the following chemical classes and corresponding examples:
   ○ Aminopyrimidines such as bupirimate,
   ○ Anilinopyrimidines such as cyprodinil, mepanipyrim, pyrimethanil,
   ○ Heteroaromatics such as hymexazol,
   ○ Heteroaromatic hydrocarbons such as etridiazole,
   ○ Chlorophenyls/Nitroanilines such as chloroneb, dicloran, quintozene, tecnazene, tolclofos-methyl,
   ○ Benzamide fungicides such as zoxamide,
   ○ Benzenesulfonamides such as flusulfamide,
   ○ Benzimidazoles such as acibenzolar, benomyl, benzothiazole, carbendazim, fuberidazole, metrafenone, probenazole, thiabendazole, triazoxide, and benzimidazole precursor fungicides,
   ○ Carbamates such as propamocarb, diethofencarb,
   ○ Carboxamides such as boscalid, diclocymet, ethaboxam, flutolanil, penthiopyrad, thifluzamide
   ○ Chloronitriles such chlorothalonil,
   ○ Cinnamic acid amides such as dimethomorph, flumorph,
   ○ Cyanoacetamide oximes such as cymoxanil,
   ○ Cyclopropancarboxamides such as carpropamid,
   ○ Dicarboximides such as iprodione, octhilinone, procymidone, vinclozolin
   ○ Dimethyldithiocarbamates such ferbam, metam, thiram, ziram,
   ○ Dinitroanilines such as fluazinam,
   ○ Dithiocarbamates such as mancopper, mancozeb, maneb, metiram, nabam, propineb, zineb,
   ○ Dithiolanes such as isoprothiolane,
   ○ Glucopyranosyl antibiotics such as streptomycin, validamycin,
   ○ Guanidines such as dodine, guazatine, iminoctadine,
   ○ Hexopyranosyl antibiotics such as kasugamycin,
   ○ Hydroxyanilides such as fenhexamid,
   ○ Imidazoles such as imazalil, oxpoconazole, pefurazoate, prochloraz, triflumizole,
   ○ Imidazolinones such as fenamidone,
   ○ Inorganics such as Bordeaux mixture, copper hydroxide, copper naphthenate, copper oleate, copper oxychloride, copper(II) sulfate, copper sulfate, copper(II) acetate, copper(II) carbonate, cuprous oxide, sulfur,
   ○ Isobenzofuranones such as phthalide,
   ○ Mandelamides such as mandipropamide,
   ○ Morpholines such as dodemorph, fenpropimorph, tridemorph, fenpropidin, piperalin, spiroxamine, aldimorph
   ○ Organotins such as fentin,
   ○ Oxazolidinones such as oxadixyl,
   ○ Phenylamides such as benalaxyl, benalaxyl-M, furalaxyl, metalaxyl, metalaxyl-M, ofurace,
   ○ Phenylpyrazoles such as fipronil,
   ○ Phenylpyrroles such as fludioxonil,
   ○ Phenylureas such as pencycuron,
   ○ Phosphonates such fosetyl,
   ○ Phthalamic acids such as tecloftalam,
   ○ Phthalimides such as captafol, captan, folpet,
   ○ Piperazines such as triforine,
   ○ Propionamides such as fenoxanil,
   ○ Pyridines such as pyrifenox,
   ○ Pyrimidines such as fenarimol, nuarimol,
   ○ Pyrroloquinolinones such as pyroquilon,
   ○ Qils such as cyazofamid,
   ○ Quinazolinones such as proquinazid,
   ○ Quinolines such as quinoxyfen,
   ○ Quinones such as dithianon,
   ○ Sulfamides such as tolylfluanid, dichlofluanid,
   ○ Strobilurines such as azoxystrobin, dimoxystrobin, famoxadone, fluoxastrobin, kresoxim-methyl, metominostrobin, picoxystrobin, pyraclostrobin, trifloxystrobin, orysastrobin,
   ○ Thiocarbamates such as methasulfocarb,
   ○ Thiophanates such as thiophanate-methyl,
   ○ Thiophencarboxamides such silthiofam,
   ○ Triazole fungicides such as azaconazole, bitertanol, bromuconazole, cyproconazole, difenoconazole, diniconazole, epoxiconazole, fenbuconazole, fluquinconazole, flusilazole, flutriafol, fluotrimazole, hexaconazole, imibenconazole, ipconazole, metconazole, myclobutanil, penconazole, propiconazole, prothioconazole, simeconazole, tebuconazole, tetraconazole, triadimefon, triadimenol, triticonazole, quinconazole
   ○ Triazolobenzothidazoles such as tricyclazole,
   ○ Valinamide carbamates such as iprovalicarb, benthiavalicarb
   ○ Fluopicolide
   ○ Pentachlorophenol
   and their mixtures.
***Herbicides.*** An herbicide is a pesticide used to kill unwanted plants. Selective herbicides kill specific targets while leaving the desired crop relatively unharmed. Some of these act by interfering with the growth of the weed and are often based on plant hormones. Herbicides used to clear waste ground are nonselective and kill all plant material with which they come into contact. Herbicides are widely used in agriculture and in landscape turf management. They are applied in total vegetation control (TVC) programs for maintenance of highways and railroads. Smaller quantities are used in forestry, pasture systems, and management of areas set aside as wildlife habitat. In general, active ingredients representing including various chemical classes and corresponding examples can be used
   ○ Anilides such as propanil
   ○ Aryloxycarboxylic acids e.g. MCPA-thioethyl
   ○ Aryloxyphenoxypropionates e.g. clodinafop-propargyl, cyhalofop-butyl, diclofops, fluazifops, haloxyfops, quizalofops,
   ○ Chloroacetamides e.g. acetolochlor, alachlor, butachlor, dimethenamid, metolachlor, propachlor
   ○ Cyclohexanedione oximes e.g. clethodim, sethoxydim, tralkoxydim,
   ○ Benzamides such as isoxaben
   ○ Benzimidazoles such as dicamba, ethofumesate
   ○ Dinitroanilines e.g. trifluralin, pendimethalin,
   ○ Diphenyl ethers e.g. aclonifen, oxyfluorfen,
   ○ The glycine derivative glyphosate, a systemic nonselective (it kills any type of plant) herbicide used in no-till burndown and for weed control in crops that are genetically modified to resist its effects,
   ○ Hydroxybenzonitriles e.g. bromoxynil,
   ○ Imidazolinones e.g. fenamidone, imazapic, imazamox, imazapic, imazapyr, imazaquin,
   ○ Isoxazolidinones e.g. clomazone
   ○ Paraquat as bypyridylium,
   ○ Phenyl carbamates e.g. desmedipham, phenmedipham,
   ○ Phenylpyrazoles e.g. pyraflufen-ethyl
   ○ Phenylpyrazolines e.g. pinoxaden,
   ○ Pyridinecarboxylic acids or synthetic auxins e.g. picloram, clopyralid, and triclopyr,
   ○ Pyrimidinyloxybenzoics e.g. bispyrtbac-sodium
   ○ Sulfonyureas e.g. amidosulfuron, azimsulfuron, bensulfuron-methyl, chlorsulfuron, flazasulfuron, foramsulfuron, flupyrsulfuron-methyl-sodium, nicosulfuron, rim-sulfuron, sulfosulfuron, tribenuron-methyl, trifloxysurlfuron-sodium, triflusulfuron, tritosulfuron,
   ○ Triazolopyrimidines e.g. penoxsulam, metosulam, florasulam,
   ○ Triketones e.g. mesotriones, sulcotrione,
   ○ Ureas e.g. diuron, linuron,
   ○ Phenoxycarboxylic acids such as 2,4-D, MCPA, MCPB, mecoprops,
   ○ Triazines such as atrazine, simazine, terbuthylazine,
   and their mixtures.
***Insecticides.*** An insecticide is a pesticide used against insects in all developmental forms. They include ovicides and larvicides used against the eggs and larvae of insects. Insecticides are used in agriculture, medicine, industry and the household. In the following, suitable chemical classes and examples of insecticides are mentioned:
   ○ Abamectin, emamectin,
   ○ Anthranilic diamides such as rynaxypyr
   ○ Synthetic auxins Duch as avermectin,
   ○ Amidines such as amitraz,
   ○ Anthranilic diamide Duch as rynaxypyr,
   ○ Carbamates such as aldicarb, carbofuran, carbaryl, methomyl, 2-(1-methylpropyl)phenyl methylcarbamate,
   ○ Chlorinated insecticides such as, for example, Camphechlor, DDT, Hexachlorocyclohexane, gamma-Hexachlorocyclohexane, Methoxychlor, Pentachlorophenol, TDE, Aldrin, Chlordane, Chlordecone, Dieldrin, Endosulfan, Endrin, Heptachlor, Mirex,
   ○ Juvenile hormone mimics such as pyriproxyfen,
   ○ Neonicotinoids such as imidacloprid, clothianidin, thiacloprid, thiamethoxam,
   ○ Organophosphorus compounds such as acephate, azinphos-methyl, bensulide, chlorethoxyfos, chlorpyrifos, chlorpyriphos-methyl, diazinon, dichlorvos (DDVP), dicrotophos, dimethoate, disulfoton, dthoprop, fenamiphos, fenitrothion, fenthion, fosthiazate, malathion, methamidophos, methidathion, methyl-parathion, mevinphos, naled, omethoate, oxydemeton-methyl, parathion, phorate, phosalone, phosmet, phostebupirim, pirimiphos-methyl, profenofos, terbufos, tetrachlorvinphos, tribufos, trichlorfon,
   ○ Oxadiazines such as indoxacarb,
   ○ Plant toxin derived compounds such as derris (rotenone), pyrethrum, neem (azadirachtin), nicotine, caffeine,
   ○ Pheromones such cuellure, methyl eugenol,
   ○ Pyrethroids such as, for example, allethrin, bifenthrin, deltamethrin, permethrin, resmethrin, sumithrin, tetramethrin, tralomethrin, transfluthrin,
   ○ Selective feeding blockers such as flonicamid, pymetrozine,
   ○ Spinosyns e.g. spinosad
   and their mixtures.
***Plant Growth Regulators.*** Plant hormones (also known as phytohormones) are chemicals that regulate plant growth. Plant hormones are signal molecules produced within the plant, and occur in extremely low concentrations. Hormones regulate cellular processes in targeted cells locally and when moved to other locations, in other locations of the plant. Plants, unlike animals, lack glands that produce and secrete hormones. Plant hormones shape the plant, affecting seed growth, time of flowering, the sex of flowers, senescence of leaves and fruits. They affect which tissues grow upward and which grow downward, leaf formation and stem growth, fruit development and ripening, plant longevity and even plant death. Hormones are vital to plant growth and lacking them, plants would be mostly a mass of undifferentiated cells. In the following, suitable plant growth regulators are mentioned:
   ○ Aviglycine,
   ○ Cyanamide,
   ○ Gibberellins such gibberellic acid,
   ○ Quaternary ammoniums such as chlormequat chloride, mepiquat chloride,
   ○ Ethylene generators such ethephone,
***Rodenticides.*** Rodenticides are a category of pest control chemicals intended to kill rodents. Rodents are difficult to kill with poisons because their feeding habits reflect their place as scavengers. They would eat a small bit of something and wait, and if they do not get sick, they would continue eating. An effective rodenticide must be tasteless and odorless in lethal concentrations, and have a delayed effect. In the following, examples for suitable rodenticides are given:
   ○ Anticoagulants are defined as chronic (death occurs after 1-2 weeks post ingestion of the lethal dose, rarely sooner), single-dose (second generation) or multiple dose (first generation) cumulative rodenticides. Fatal internal bleeding is caused by lethal dose of anticoagulants such as brodifacoum, coumatetralyl or warfarin. These substances in effective doses are antivitamins K, blocking the enzymes K₁-2,3-epoxide-reductase (this enzyme is preferentially blocked by 4-hydroxycoumarin/4-hydroxythiacoumarin derivatives) and K₁-quinone-reductase (this enzyme is preferentially blocked by indandione derivatives), depriving the organism of its source of active vitamin K₁. This leads to a disruption of the vitamin K cycle, resulting in an inability of production of essential blood-clotting factors (mainly coagulation factors II (prothrombin), VII (proconvertin), IX (Christmas factor) and X (Stuart factor)). In addition to this specific metabolic disruption, toxic doses of 4-hydroxycoumarin/4-hydroxythiacoumarin and indandione anticoagulants are causing damage to tiny blood vessels (capillaries), increasing their permeability, causing diffuse internal bleedings (haemorrhagias). These effects are gradual; they develop in the course of days and are not accompanied by any nociceptive perceptions, such as pain or agony. In the final phase of intoxication the exhausted rodent collapses in hypovolemic circulatory shock or severe anemia and dies calmly. Rodenticidal anticoagulants are either first generation agents (4-hydroxycoumarin type: warfarin, coumatetralyl; indandione type: pindone, diphacinone, chlorophacinone), generally requiring higher concentrations (usually between 0.005 and 0.1%), consecutive intake over days in order to accumulate the lethal dose, poor active or inactive after single feeding and less toxic than second generation agents, which are derivatives of 4-hydroxycoumarin (difenacoum, brodifacoum, bromadiolone and flocoumafen) or 4-hydroxy-1-benzothiin-2-one (4-hydroxy-1-thiacoumarin, sometimes incorrectlly referred to as 4-hydroxy-1-thiocoumarin, for reason see heterocyclic compounds), namely difethialone. Second generation agents are far more toxic than first generation agents, they are generally applied in lower concentrations in baits (usually in the order of 0.001 - 0.005%), and are lethal after single ingestion of bait and are effective also against strains of rodents that have become resistant against first generation anticoagulants; thus the second generation anticoagulants are sometimes referred to as "superwarfarins". Sometimes, anticoagulant rodenticides are potentiated by an antibiotic, most commonly by sulfaquinoxaline. The aim of this association (e.g. warfarin 0.05% + sulfaquinoxaline 0.02%, or difenacoum 0.005% + sulfaquinoxaline 0.02% etc.) is that the antibiotic/bacteriostatic agent suppresses intestinal/gut symbiotic microflora that represents a source of vitamin K. Thus the symbiotic bacteria are killed or their metabolism is impaired and the production of vitamin K by them is diminuted, an effect which logically contributes to the action of anticoagulants. Antibiotic agents other than sulfaquinoxaline may be used, for example co-trimoxazole, tetracycline, neomycin or metronidazole. A further synergism used in rodenticidal baits is that of an association of an anticoagulant with a compound with vitamin D-activity, i.e. cholecalciferol or ergocalciferol (see below). A typical formula used is, e. g., warfarin 0.025 - 0.05% + cholecalciferol 0.01%. In some countries there are even fixed three- component rodenticides, i.e. anticoagulant + antibiotic + vitamin D, e. g. difenacoum 0.005% + sulfaquinoxaline 0.02% + cholecalciferol 0.01%. Associations of a second-generation anticoagulant with an antibiotic and/or vitamin D are considered to be effective even against the most resistant strains of rodents, though some second generation anticoagulants (namely brodifacoum and difethialone), in bait concentrations of 0.0025 - 0.005% are so toxic that no known resistant strain of rodents exists and even rodents resistant against any other derivatives are reliably exterminated by application of these most toxic anticoagulants.
      Vitamin K₁ has been suggested and successfully used as an antidote for pets or humans, which/who were either accidentally or intentionally (poison assaults on pets, suicidal attempts) exposed to anticoagulant poisons. In addition, since some of these poisons act by inhibiting liver functions and in progressed stages of poisoning, several blood-clotting factors as well as the whole volume of circulating blood lacks, a blood transfusion (optionally with the clotting factors present) can save a person's life who inadvertently takes them, which is an advantage over some older poisons.
   ○ Metal phosphides have been used as a means of killing rodents and are considered single-dose fast acting rodenticides (death occurs commonly within 1-3 days after single bait ingestion). A bait consisting of food and a phosphide (usually zinc phosphide) is left where the rodents can eat it. The acid in the digestive system of the rodent reacts with the phosphide to generate the toxic phosphine gas. This method of vermin control has possible use in places where rodents are resistant to some of the anticoagulants, particularly for control of house and field mice; zinc phosphide baits are also cheaper than most second-generation anticoagulants, so that sometimes, in cases of large infestation by rodents, their population is initially reduced by copious amounts of zinc phosphide bait applied, and the rest of the population that survived the initial fast-acting poison is then eradicated by prolonged feeding on anticoagulant bait. Inversely, the individual rodents that survived anticoagulant bait poisoning (rest population) can be eradicated by pre-baiting them with nontoxic bait for a week or two (this is important to overcome bait shyness, and to get rodents used to feeding in specific areas by offering specific food, especially when eradicating rats) and subsequently applying poisoned bait of the same sort as used for pre-baiting until all consumption of the bait ceases (usually within 2-4 days). These methods of alternating rodenticides with different modes of action provides a factual or an almost 100% eradication of the rodent population in the area if the acceptance/palatability of bait is good (i.e., rodents readily feed on it).
   ○ Phosphides are rather fast acting rat poisons, resulting in that the rats are dying usually in open areas instead of the affected buildings. Typical examples are aluminum phosphide (fumigant only), calcium phosphide (fumigant only), magnesium phosphide (fumigant only) and zinc phosphide (in baits). Zinc phosphide is typically added to rodent baits in amounts of around 0.75-2%. The baits have a strong, pungent garlic- like odor characteristic for phosphine liberated by hydrolysis. The odor attracts (or, at least, does not repulse) rodents, but has a repulsive effect on other mammals; birds, however (notably wild turkeys), are not sensitive to the smell and feed on the bait thus becoming collateral damage.
   ○ Hypercalcemia. Calciferols (vitamins D), cholecalciferol (vitamin D₃) and ergocalciferol (vitamin D₂) are used as rodenticides, which are toxic to rodents for the same reason that they are beneficial to mammals: they are affecting calcium and phosphate homeostasis in the body. Vitamins D are essential in minute quantities (few IUs per kilogram body weight daily, which is only a fraction of a milligram), and like most fat soluble vitamins they are toxic in larger doses as they readily result in the so-called hypervitaminosis, which is, simply said, poisoning by the vitamin. If the poisoning is severe enough (that is, if the dose of the toxicant is high enough), it eventually leads to death. In rodents consuming the rodenticidal bait it causes hypercalcemia by raising the calcium level, mainly by increasing calcium absorption from food, mobilising bone-matrix-fixed calcium into ionised form (mainly monohydrogencarbonate calcium cation, partially bound to plasma proteins, [CaHCO₃]⁺), which circulates dissolved in the blood plasma, and after ingestion of a lethal dose the free calcium levels are raised sufficiently so that blood vessels, kidneys, the stomach wall and lungs are mineralised/calcificated (formation of calcificates, crystals of calcium salts/complexes in the tissues thus damaging them), leading further to heart problems (myocard is sensitive to variations of free calcium levels that are affecting both myocardial contractibility and excitation propagation between atrias and ventriculas) and bleeding (due to capillary damage) and possibly kidney failure. It is considered to be single-dose, or cumulative (depending on concentration used; the common 0.075% bait concentration is lethal to most rodents after a single intake of larger portions of the bait), sub-chronic (death occurring usually within days to one week after ingestion of the bait). Applied concentrations are 0.075% cholecalciferol and 0.1 % ergocalciferol when used alone. There is an important feature of calciferols toxicology which is that they are synergistic with anticoagulant toxicants. This means that mixtures of anticoagulants and calciferols in the same bait are more toxic than the sum of toxicities of the anticoagulant and the calciferol in the bait so that a massive hypercalcemic effect can be achieved by a substantially lower calciferol content in the bait and vice-versa. More pronounced anticoagulant/hemorrhagic effects are observed if calciferol is present. This synergism is mostly used in baits low in calciferol because effective concentrations of calciferols are more expensive than effective concentrations of most anticoagulants. The historically very first application of a calciferol in rodenticidal bait was, in fact, the Sorex product Sorexa® D (with a different formula than today's Sorexa® D) back in the early 1970's, containing warfarin 0.025% + ergocalciferol 0.1%. Today, Sorexa® CD contains a 0.0025% difenacoum + 0.075% cholecalciferol combination. Numerous other brand products containing either calciferols 0.075 - 0.1% (e. g. Quintox®, containing 0.075% cholecalciferol) alone, or a combination of calciferol 0.01 - 0.075% with an anticoagulant are marketed.
***Miticides, moluscicides and nemaficides.*** Miticides are pesticides that kill mites. Antibiotic miticides, carbamate miticides, formamidine miticides, mite growth regulators, organochlorine, permethrin and organophosphate miticides all belong to this category. Molluscicides are pesticides used to control mollusks, such as moths, slugs and snails. These substances include metaldehyde, methiocarb and aluminium sulfate. A nematicide is a type of chemical pesticide used to kill parasitic nematodes (a phylum of worm). A nematicide is obtained from a neem tree's seed cake; which is the residue of neem seeds after oil extraction. The neem tree is known by several names in the world but was first cultivated in India since ancient times.

### Antimicrobials

In the following examples, antimicrobials suitable for agrochemical compositions according to the present invention are given. Bactericidal disinfectants mostly used are those applying
○ active chlorine (i.e., hypochlorites, chloramines, dichloroisocyanurate and trichloroisocyanurate, wet chlorine, chlorine dioxide, etc.),
○ active oxygen (peroxides such as peracetic acid, potassium persulfate, sodium perborate, sodium percarbonate and urea perhydrate),
○ iodine (iodpovidone (povidone-iodine, Betadine), Lugol's solution, iodine tincture, iodinated nonionic surfactants),
○ concentrated alcohols (mainly ethanol, 1-propanol, called also n-propanol and 2-propanol, called isopropanol and mixtures thereof; further, 2-phenoxyethanol and 1-and 2-phenoxypropanols are used),
○ phenolic substances (such as phenol (also called "carbolic acid"), cresols (called "Lysole" in combination with liquid potassium soaps), halogenated (chlorinated, brominated) phenols, such as hexachlorophene, triclosan, trichlorophenol, tribromophenol, pentachlorophenol, Dibromol and salts thereof),
○ cationic surfactants such as some quaternary ammonium cations (such as benzalkonium chloride, cetyl trimethylammonium bromide or chloride, didecyldimethylammonium chloride, cetylpyridinium chloride, benzethonium chloride) and others, non-quarternary compounds such as chlorhexidine, glucoprotamine, octenidine dihydrochloride, etc.),
○ strong oxidizers such as ozone and permanganate solutions;
○ heavy metals and their salts such as colloidal silver, silver nitrate, mercury chloride, phenylmercury salts, copper sulfate, copper oxide-chloride etc. Heavy metals and their salts are the most toxic and environmentally hazardous bactericides and, therefore, their use is strongly suppressed or forbidden; further, also
○ properly concentrated strong acids (phosphoric, nitric, sulfuric, amidosulfuric, toluenesulfonic acids) and
○ alcalis (sodium, potassium, calcium hydroxides) between pH < 1 or > 13, particularly below elevated temperatures (above 60°C) kill bacteria.

As antiseptics (i.e., germicide agents that can be used on human or animal body, skin, mucoses, wounds and the like), few of the above mentioned disinfectants can be used under proper conditions (mainly concentration, pH, temperature and toxicity toward man/animal). Among them, important are
○ Some properly diluted chlorine preparations (e. g. Daquin's solution, 0.5% sodium or potassium hypochlorite solution, pH-adjusted to pH 7 - 8, or 0.5 - 1% solution of sodium benzenesulfochloramide (chloramine B)), some
○ iodine preparations such as iodopovidone in various galenics (ointments, solutions, wound plasters), in the past also Lugol's solution,
○ peroxides as urea perhydrate solutions and pH-buffered 0.1 - 0.25% peracetic acid solutions,
○ alcohols with or without antiseptic additives, used mainly for skin antisepsis,
○ weak organic acids such as sorbic acid, benzoic acid, lactic acid and salicylic acid
○ some phenolic compounds such as hexachlorophene, triclosan and Dibromol, and
○ cation-active compounds such as 0.05 - 0.5% benzalkonium, 0.5 - 4% chlorhexidine, 0.1 - 2% octenidine solutions.

Bactericidal antibiotics kill bacteria; bacteriostatic antibiotics only slow down their growth or reproduction. Penicillin is a bactericide, as are cephalosporins. Aminoglycosidic antibiotics can act in both a bactericidic manner (by disrupting cell wall precursor leading to lysis) or bacteriostatic manner (by connecting to 30s ribosomal subunit and reducing translation fidelity leading to inaccurate protein synthesis). Other bactericidal antibiotics according to the present invention include the fluoroquinolones, nitrofurans, vancomycin, monobactams, co-trimoxazole, and metronidazole Preferred actives are those with systemic or partially systemic mode of action such as for example azoxystrobin.

The overall preferred biocide is of course glyphosate and its salts.

### Alkoxylation products of unsaturated alcohols

Alkoxylation products of unsaturated alcohols represent non-ionic surfactants which are known from the state of the art and can be obtained according to standards methods of organic chemistry, in particular by adding ethylene oxide and/or propylene oxide units to unsaturated fatty alcohols in the presence of alkaline catalysts. Preferably, said alkoxylation products forming component b follow general formula (I)

R¹O(CH₂CHR²)ₙOH (I)

in which R¹ stands for a linear or branched unsaturated carbohydrate or hydroxy-carbohydrate radical having 12 to 22 carbon atoms and 1, 2 or 3 double bonds, R² stands for hydrogen or a methyl radical and n represents an integer of from about 1 to about 100. Typical examples are adducts of about 1 to about 100, preferably about 5 to about 50 and most preferably about 10 to about 25 moles ethylene oxide and/or about 1 to about 20, preferably about 2 to about 15 and most preferably about 5 to about 10 moles propylene oxide to oleyl alcohol, elaidyl alcohol, linolyl alcohol, linolenyl alcohol, erucyl alcohol, ricinolyel alcohol and their technical mixtures as one can obtain from vegetable oils like sunflower oil, rape seed oil, colza oil, castor oil and the like e.g. after Transesterification and hydrogenation of the methyl esters thus obtained. The overall most preferred species, however, are adducts of on average about 10 to about 25 moles ethylene oxide to oleyl alcohol.

Compositions according to the present invention may comprise said biocides and said alkoxylation products in a ratio by weight of about 1:5 to about 5:1, preferably about 1:3 to about 3:1.

### Agricultural compositions

In a preferred embodiment the agricultural compositions according to the present invention comprise:
(a) about 10 to about 50 % b.w., preferably about 15 to about 35 % b.w. biocides:
(b) about 1 to about 90 % b.w., preferably about 5 to about 25 % b.w. alkoxylation products of unsaturated alcohols, and
(c) 0 to about 80 % b.w., preferably about 10 to about 70 % b.w. auxiliary agents and/or polyols
on condition that the amounts add to 100 % b.w.

### Auxiliary agents

Agricultural compositions may comprise as optional component (c) auxiliary agents, like solvents, emulsifiers, dispersants, adjuvants, and the like selected from the group consisting of fatty acid dialkyl amides, fatty acids, fatty alcohols, fatty alcohol polyglycolethers, fatty amine polyglycolethers, end-capped fatty alcohol polyglycol ethers, and alkoxylated vegetable oils. Suitable auxiliaries may also be chosen from anionic components like alkyl benzene sulfonates, in particular dodecyl benzenesulfonates for example in form of their sodium, ammonium, triethanolammonium, or calcium salts, alkyl sulfates and/or alkyl ethersulfates in form of their sodium, ammonium or triethanolamine salts, or citric acid esters from fatty alcohol alkoxylates or fatty acid monoglycerides, or phosphoric acid esters of linear or branched fatty alcohols and/or their alkoxylated products in form of their potassium, ammonium or triethanolammonium salts. The preferred auxiliary agents are fatty acid dialkyl amides, tallow amine alkoxylates, alkoxylated vegetable oils, polyol esters, alkyl polyglucosides and their alkoxylation products.

### Polyols

Agricultural compositions may comprise as optional component (c) polyols, selected from the group consisting of:
○ glycerol;
○ alkylene glycols such as, for example, ethylene glycol, diethylene glycol, propylene glycol, butylene glycol, hexylene glycol and polyethylene glycols with an average molecular weight of 100 to 1000 Dalton;
○ technical oligoglycerol mixtures with a degree of self-condensation of 1.5 to 10, such as for example technical diglycerol mixtures with a diglycerol content of 40 to 50% by weight;
○ methylol compounds such as, in particular, trimethylol ethane, trimethylol propane, trimethylol butane, pentaerythritol and dipentaerythritol;
○ lower alkyl glucosides, particularly those containing 1 to 8 carbon atoms in the alkyl group, for example methyl and butyl glucoside;
○ sugar alcohols containing 5 to 12 carbon atoms, for example sorbitol or mannitol,
○ sugars containing 5 to 12 carbon atoms, for example glucose or sucrose;
○ amino sugars, for example glucamine;
○ dialcoholamines, such as diethanolamine or 2-aminopropane-1,3-diol.
Overall preferred polyols are glycerol, ethylene glycol, propylene glycol or their mixtures.

### Industrial application

Further on, additional embodiments of the present invention cover the use of alkoxylation products of unsaturated alcohols as additives for non-aqueous, preferably solid agricultural compositions, in particular as
○ solvents for making agricultural compositions;
○ emulsifiers for making agricultural compositions;
○ adjuvants for making agricultural compositions;
○ tank-mix additives;
○ carrier medium for suspension concentrates or oil dispersions (SC or OD-formulations).

### Examples

### Examples 1 to 6, Comparison Examples C1 to C5

### Green house trials

For each trial the fresh weight of the plants were measured 21 days after treatment and compared with untreated plants. Best adjuvants are the ones which lead to a small fresh weight meaning that the plant is almost killed. The performance of the adjuvants on both species is expressed as percentage of the fresh weights of untreated plants. The adjuvants are added to the unformulated mono-isopropylamine salt of glyphosate [MON 8717 (glyphosate ipa salt 648 g ai/L = 2.84 M without adjuvant)] at a concentration of 0.25 % (w/v). A sub-optimal rate of glyphosate, giving a 0 to 20% growth reduction without adjuvant, is used to demonstrate the adjuvant effects. Based on previous work, these rates are 77.8 g ae/ha (equivalent to 2.3 mM at 200 L/ha) on wheat and 30.4g ae/ha (equivalent to 0.9 mM) on black nightshade (*Solanum ptycanthum* = SOLNI). The results are compiled in table 1; all results are compared to an untreated standard which set to 100 %. Examples 1 to 6 represent the invention, example C1 to C5 are presented for comparison.

**Table 1**

| **Green house trials; all results in [%-rel.]** | | | | | | | | | | | |
|---|---|---|---|---|---|---|---|---|---|---|---|
| **Compositions** | **C1** | **1** | **2** | **3** | **4** | **5** | **6** | **C2** | **C3** | **C4** | **C5** |
| Glyphosate | + | + | + | + | + | + | + | + | + | + | + |
| Oleylalcohol+2EO | - | + | - | - | - | - | - | - | - | - | - |
| Oleylalcohol+5EO | - | - | + | - | - | - | + | - | - | - | - |
| Oleylalcohol+10EO | - | - | - | + | - | - | - | - | - | - | - |
| Oleylalcohol+25EO | - | - | - | - | + | - | - | - | - | - | - |
| Oleylalcohol+30EO | - | - | - | - | - | + | - | - | - | - | - |
| Glycerol monooleate | - | - | - | - | - | - | + | + | - | - | - |
| Glycerol mono/dioleate | - | - | - | - | - | - | - | - | + | - | - |
| Tallowamine+15EO | - | - | - | - | - | - | - | - | - | + | - |
| Tallowamine+20EO | - | - | - | - | - | - | - | - | - | - | + |
| *Results* | | | | | | | | | | | |
| SOLNI [%] | 69 | 62 | 30 | 13 | 11 | 10 | 48 | 95 | 80 | 14 | 15 |
| Wheat [%] | 91 | 33 | 29 | 23 | 21 | 21 | 48 | 77 | 57 | 25 | 25 |

## Claims

1. Non-aqueous agricultural compositions, comprising
(a) biocides and
(b) alkoxylation products of unsaturated fatty alcohols.

2. Compositions according to Claim 1, **characterised in that** said biocides (component a) are selected from the group consisting of insecticides, herbicides, fungicides and plant growth regulators or their mixtures.

3. Compositions according to Claims 1 and/or 2, **characterised in that** said biocide is glyphosate or one of its salts.

4. Compositions according to any of the preceding claims 1 to 3, **characterised in that** said alkoxylation products (component b) follow general formula (I)
R¹O(CH₂CHR²)ₙOH (I)
in which R¹ stands for a linear or branched unsaturated carbohydrate or hydroxy-carbohydrate radical having 12 to 22 carbon atoms and 1, 2 or 3 double bonds, R² stands for hydrogen or a methyl radical and n represents an integer of from 1 to 100.

5. Compositions according to any of the preceding Claims 1 to 4, **characterised in that** said alkoxylation products represent adducts of on average 10 to 25 Moles ethylene oxide to Oleyl alcohol.

6. Compositions according to any of the preceding Claims 1 to 5, **characterised in that** they comprise said biocides and said alkoxylation products in a ratio by weight of 1:5 to 5:1.

7. Compositions according to any of the preceding Claims 1 to 6, **characterised in that** they comprise
(a) 10 to 50 % b.w. biocides
(b) 1 to 90 % b.w. alkoxylation products of unsaturated fatty alcohols
(c) 0 to 80 % b.w. co-adjuvants, and
(d) 0 to 10 % b.w. polyols,
on condition that the components to 100 % b.w.

8. Compositions according to any of the preceding Claims 1 to 7, **characterised in that** they comprise as optional component (c) co-adjuvants selected from the group consisting of fatty acid dialkyl amides, tallow amine alkoxylates, alkoxylated vegetable oils, polyol esters, alkyl polyglucosides and their alkoxylation products..

9. Compositions according to any of the preceding Claims 1 to 8 **characterised in that** they comprise as optional component (d) polyols selected from the group consisting of glycerol, ethylene glycol or propylene glycol.

10. Use of alkoxylation products of unsaturated fatty alcohols as additives for non-aqueous agricultural compositions.
